# EUROPEAN PATENT APPLICATION

(11) **EP 1 437 732 A1**
(43) Date of publication of application: **14.07.2004**
(21) Application number: 03007684.8
(22) Date of filing: 03.04.2003
(51) Int. Cl.: G11B 19/00

(54) **Portable Digital Video Recorder**

(30) Priority: 08.01.2003 KR 2003000494
(71) Applicant: Korea Digital Communication Co., Ltd., Seoul, 153-023 (KR)
(72) Inventor: An, Jong-Kun, Giheung-eup, Kyungi-do, 449-908 (KR); Park, Chan-Ho, Seoul, 122-010 (KR)
(74) Representative: Becker Kurig Straus

(57) **Abstract**

Disclosed is a note DVR comprising a housing, and storage and control unit of DVR installed in the housing, characterized by having a display plate bonded to an edge of the upper surface of the housing by a hinge, a front panel switch part disposed at one side of the upper surface of the housing, which is open and closed by the display plate, and input-output ports for audio and video signals at the rear surface of the housing.

## Description

### BACKGROUND OF THE INVENTION

### Field of the Invention

The present invention relates to a note DVR, and more particularly a note DVR having a liquid crystal display disposed on the inner surface of the upper cover of a note shaped housing which can be open and closed by a hinge and input and output ports on the rear side of the housing so that video and audio signals can be connected according to their cannels.

### Description of the Related Art

In general, a DVR has a construction to convert an image taken by CCD (Charge Coupled Device) camera into digital signals and storage them in a memory. When it replays a stored image, it reads the digital signals corresponding to the image, converts them into an analogue image and displays the analogue image on a monitor so that a user can see. Meanwhile, the data of an image to be stored in the memory is desirably as small as possible. Therefore, DVR manufacturers try to reduce the data amount of an image to be stored through various methods, such as by developing codec (coder/decoder) technologies in their own ways to reduce the number of frames, by lowering image quality, etc. in order to reduce the data amount of an image to be stored.

However, conventional DVRs applying the above methods comprise a main body having a memory to store data, a monitor having a display screen, a keyboard to apply desired photographing conditions while a user sees the monitor, as needed, and a state imaging device (mostly CCD) to photographing an image and sending it to the main body. Accordingly, they require a large space where the foregoing components can be provided and also human power to install the foregoing components.

### SUMMARY OF THE INVENTION

Therefore, the present invention has been made in view of the above problems, and it is an object of the present invention to provide a small-sized note DVR which can perform input, output and display functions and is handy to carry by comprising a main body with a reduced size as small as a note, an LCD displayer installed to be open and closed and input ports for receiving audio and video signals and an alarm signal and various sensors at the rear side of the main body.

In order to accomplish the above objects, there is provided a note DVR comprising a front panel switch part disposed at one side of the upper surface of a housing, which is open and closed by a display, input and output ports for receiving and sending audio and video signals and an alarm signal and various sensor signals at the rear surface of the housing and a DVR control part (circuit) installed in the housing.

According to the present invention, the note DVR comprising a housing, and storage and control unit of DVR installed in the housing has a display plate bonded to an edge of the upper surface of the housing by a hinge, a front panel switch part disposed at one side of the upper surface of the housing, which is open and closed by the display plate and input and output ports for receiving and sending audio and video signals and an alarm signal and various sensor signals at the rear surface of the housing.

The input and output ports for receiving and sending audio and video signals comprises a video channel input part for receiving video signals according to their channels, a video output part and an audio output part.

The note DVR may further comprise a sensor port and an alarm port for receiving signals from a sensor part and an alarm part, respectively.

### BRIEF DESCRIPTION OF THE DRAWINGS

The above and other objects, features and other advantages of the present drawings, in which: invention will be more clearly understood from the following detailed description taken in conjunction with the accompanying
Fig. 1 is a block diagram of the present invention;
Fig. 2 is a perspective view of'the DVR according to the present invention; and
Fig. 3 is an enlarged perspective view showing the rear side of the main body.

### DESCRIPTION OF THE PREFERRED EMBODIMENTS

Now, the present invention will be described in detail with reference to the drawings.

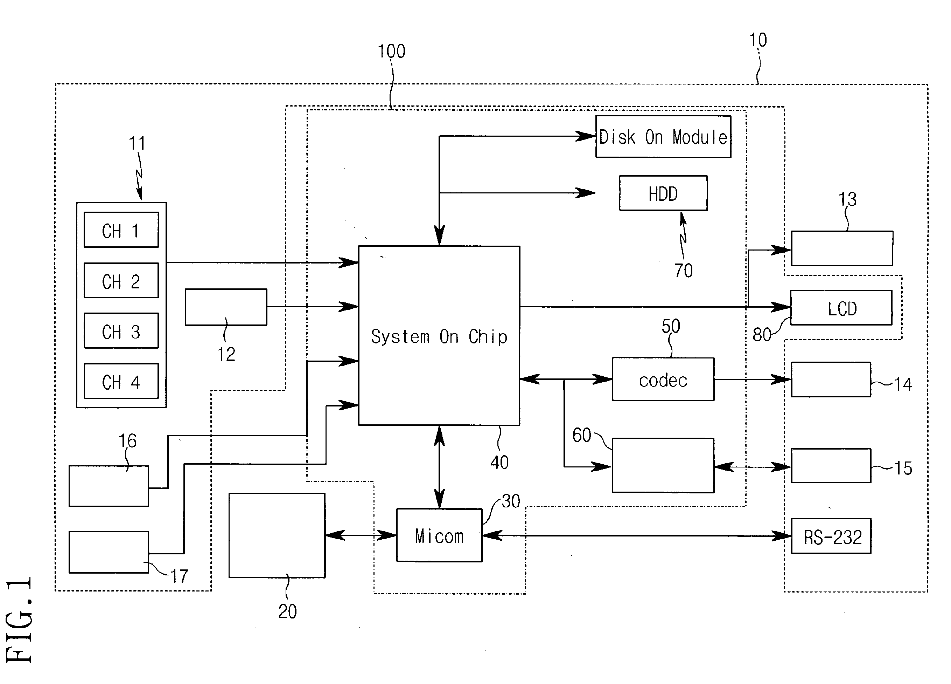

Fig. 1 is a block diagram of the present invention, which comprises an input-output part 10 for receiving and sending audio and video signals, a front panel switch part 20 for instructing various control signals, a micom 30 for recognizing the switch state of the switch part 20, providing the result to a main processor and communicating through serial ports (RS-232), a main processor 40 for recognizing the input signals and giving general storage and output instructions, a converter 50 for receiving output data from the main processor 40 and converting them to analogue signals for output, and a LAN card 60 for driving of the DVR upon receiving the instruction from the main processor 40, as needed for networking. A storage medium 70 is a part for storing data, including, for example, HDD or other storage media. An LCD 80 is a part for displaying video signals according to the instruction from the main processor 40. The micom 30, main processor 40, converter 50, LAN card 60 and storage medium 70 combine to constitute a control part 100 of the DVR.

The input-output part 10 comprises a video port 11 for receiving video signals from a state imaging device, an audio port 12 for receiving audio signals, a video output port 13, audio output port 14, an Ethernet port 15 for connecting LAN output from the LAN card 60, a serial port (RS-232) for serial communication, a sensor port 16 for receiving a value from a sensor and an alarm port 17 for receiving alarm signals.

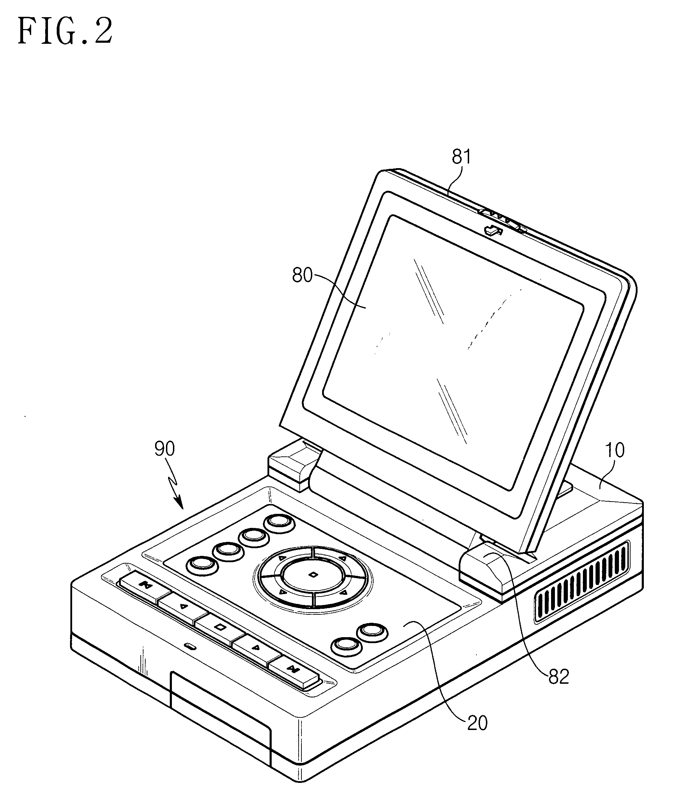

Fig. 2 is a perspective view of the DVR according to the present invention, which comprises a front panel 20 formed of a part of the upper surface of the housing 90, an LCD 80 disposed on a display plate 81 binding to a hinge holder 82 projected on an edge of the upper surface of the housing while covering the front panel switch part 20 and an input-output part 10 extended at the rear surface of the housing 90. The hinge holder 82 is preferably disposed at an interface between the input-output part 10 and the front panel switch part 20.

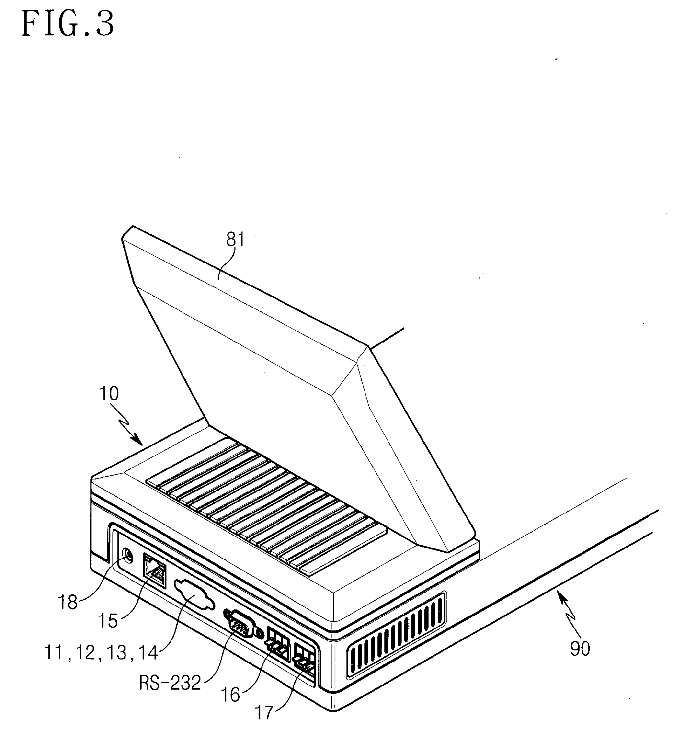

Fig. 3 is an enlarged perspective view of the rear side of the main body showing the input-output part of the DVR according to the present invention, which comprises input and output ports 11, 12, 13, 14 for video and audio signals, an Ethernet port 15, a sensor port 16, an alarm port 17, a serial port (RS-232) and a power jack.

The DVR according to the present invention having the above-described construction, as shown in Fig. 1 and Fig. 3, selectively receives video and audio signals from a desired channel through the video port 11 and the audio port 12. Then, the micom 30 provide an instruction applied by operation of the front panel switch part 20 to the main processor 40. After channel selection, signals from the selected channel are stored in a storage medium 70 and displayed on the LCD 80 at the same time. Alternatively, the signals from the selected channel can be displayed or stored at an external device (for example, video devices, etc) through the video output port 13 and the audio output port 14, as needed. Of course, for the video output, video signals stored in the storage medium 70 are outputted while audio signals are outputted through the audio output port 14 in the analogue state via the converter 50.

Also, the note DVR can form a networking through Ethernet port 15 by the LAN card 60.

As described above, according to the present invention, it is possible to provide convenience in use since the housing is made in the form of a note which is handy to carry, the front panel switch part 20 for operation is disposed on the upper surface of the housing, thereby being ready for operation, and the display plate 81 is adapted to cover the front panel switch part 20 so that the size of the DVR is reduced for handiness and convenience during carrying and transporting and the DVR can be used by opening the display plate 81 without a separate monitor during using, as shown in Fig. 2.

Also, the DVR according to the present invention can receive audio and video signals and various input-output signals through corresponding ports by comprising the input-output part 10 extended on the rear surface of the housing 90, as shown in Fig. 2 and Fig. 3 and thus can realize the functions which conventional DVRs serve without functional deterioration. For this, since the DVR according to the present invention comprises the input-output part 10 extended on the rear surface of the housing 90, it is possible to realize the functions of the conventional DVRs. Furthermore, the DVR according to the present invention has the hinge holder 82 disposed on the interface between the input-output part 10 and the front panel switch part 20 to bond the display plate 81 to the housing 90 by hinge. Therefore, the front panel switch part 20 can be readily open and closed. The LCD 80 is installed on the display plate 81 to display an image.

Thus, since the DVR according to the present invention comprises a front panel switch part on the upper surface of a housing in the form of a note and a DVR control part in the housing to perform the DVR functions and has an LCD on a display plate adapted to cover the front panel switch part to display an image, it is possible to form a display means in a single body with the housing, thereby being ready to use and install. Also, since ports for sending various input-output signals are provided on an input-output part extended from the rear surface so that the DVR operates by selecting a channel according to the instruction of a control part, it is possible to realize all functions of DVR with a single device thereby reducing install space and improving mobility.

Although the preferred embodiments of the present invention have been disclosed for illustrative purposes, those skilled in the art will appreciate that various modifications, additions and substitutions are possible, without departing from the scope and spirit of the invention as disclosed in the accompanying claims.

## Claims

1. A note DVR comprising a housing, and storage and control unit of DVR installed in the housing, **characterized by** having a display plate bonded to an edge of the upper surface of the housing by a hinge, a front panel switch part disposed at one side of the upper surface of the housing, which is open and closed by the display plate, and input-output ports for receiving and sending audio and video signals at the rear surface of the housing.

2. The note DVR according to claim 1, wherein the input-output ports for audio and video signals comprises a video port for receiving video signals from a state imaging device, an audio port for receiving audio signals, a video output port, audio output port, an Ethernet port for connecting LAN output from a LAN card and a serial port (RS-232) for serial communication.

3. The note DVR according to claim 1, wherein the input-output ports for audio and video signals further comprises a sensor port for receiving a value from a sensor and an alarm port for receiving alarm signals.
